# EUROPÄISCHE PATENTSCHRIFT

(11) **EP 1 428 623 B1**
(45) Veröffentlichungstag und Bekanntmachung des Hinweises auf die Patenterteilung: **18.01.2006**
(21) Anmeldenummer: 03104147.8
(22) Anmeldetag: 11.11.2003
(51) Int. Cl.: B24B 3/33, C09K 3/14, B28D 7/00

(54) **Schärfmittel für Bohrkronen**
Sharpening means for core drills
Moyen d'affûtage pour forets tubulaires

(30) Priorität: 13.11.2002 DE 10252742
(43) Veröffentlichungstag der Anmeldung: 16.06.2004
(73) Patentinhaber: HILTI Aktiengesellschaft, 9494 Schaan (LI)
(72) Erfinder: Goedickemeier, Martin, 9000, St. Gallen (CH)
(74) Vertreter: Wildi, Roland

(56) Entgegenhaltungen:
- DE-A- 2 531 182
- DE-A- 4 027 821
- GB-A- 924 638

## Beschreibung

Die Erfindung bezeichnet ein Schärfmittel für Bohrkronen mit hartstoffbesetzten Schleifsegmenten, insbesondere Diamantbohrkronen für Gestein mit geometrisch undefinierten Diamantschneiden, welche in eine Trägermatrix eingebettet sind.

Als Kernbohrkronen oder Vollbohrkronen ausgebildete Bohrkronen mit hartstoffbesetzten Schleifsegmenten stumpfen während der Nutzungsdauer ab, indem sich die Zwischenräume zwischen den in eine Trägermatrix eingebetteten Hartstoffpartikeln zusetzen oder diese Hartstoffpartikel ausbrechen. Üblicherweise werden deshalb derartige Bohrkronen nachgeschärft, indem im abrasiven Reibkontakt mit einem Schärfmittel die weichere Trägermatrix etwas abgetragen wird, wodurch die zuvor noch eingebetteten härteren Hartstoffpartikel die neue, nunmehr wieder scharfe, Schleifoberfläche bilden.

Nach der DE4027821A1 ist ein derartiges Schärfmittel als eine mit Korund, Carborundum und dgl. abrasiven Stoffen gefüllte Schärfplatte ausgebildet. Diese Massnahme hat den Nachteil, dass solche Schärfplatten sperrig, schwer, teuer und bei der Anwendung selten verfügbar sind; wenn sie auf der Baustelle gebraucht werden. Dadurch kommt es beim Bohren häufig zu Störungen und Unterbrechungen.

Der Erfindung liegt die Aufgabe zugrunde, das Schärfmittel anwenderfreundlich zur Verfügung zu stellen, wodurch rationell eine stumpf gewordene Bohrkrone nachgeschärft werden kann.

Die Aufgabe wird im Wesentlichen durch die Merkmale der unabhängigen Ansprüche gelöst. Vorteilhafte Weiterbildungen ergeben sich aus den Unteransprüchen.

Im Wesentlichen ist ein mit abrasiven Stoffen gefülltes Schärfmittel für eine Bohrkrone mit hartstoffbesetzten Schleifsegmenten strangförmig ausgebildet, wobei im zugeordneten Schärfverfahren ein derart strangförmig, bspw. bandförmig oder schlauchförmig, ausgebildetes Schärfmittel umfänglich in ein zuvor durch die Bohrkrone selbst erzeugtes Bohrloch bzw. einen Kreisringspalt passt und anschliessend durch diese gegen den Grund des Sackloches gedrückt werden kann, um dort reibkraftschlüssig fixiert die Schleifsegmente der Bohrkrone nachzuschärfen.

Somit entfällt die Notwendigkeit einer sperrigen zusätzlichen Schärfplatte. Zudem ist das Schärfmittel nahezu vollständig ausnutzbar.

Vorteilhaft wird beim Nachschärfen eine bezüglich der zweckentsprechenden Nutzung der Bohrkrone geringe Drehzahl und/oder geringere Kühlwasserzufuhr benutzt, wodurch der nachschärfende, abrasive Verschleiss beschleunigt wird.

Vorteilhaft ist das Schärfmittel von einer quasi endlosen Vorratsrolle ablängbar ausgeführt, wodurch für unterschiedliche Bohrdurchmesser entsprechend lange, strangförmig ausgebildete Schärfmittel vor Ort verfügbar sind.

Vorteilhaft bildet das Schärfmittel längs seiner strangförmigen Länge mehrere Sollbruchstellen aus, wodurch ein entsprechendes Ablängen erleichtert wird.

Vorteilhaft ist das Schärfmittel aus einer mit abrasiven Stoffen gefüllten Matrix ausgebildet, weiter vorteilhaft aus einer weichen Kunststoffmatrix, wodurch die abrasiven Stoffe sowohl verteilt und gegeneinander fixiert sind.

Alternativ vorteilhaft ist das Schärfmittel aus einem, weiter vorteilhaft wasserunlöslichen, Schlauch ausgebildet, der mit losen abrasiven Stoffen gefüllt ist, wodurch diese innerhalb des Schlauchs gegeneinander fixiert sind.

Vorteilhaft ist der Schlauch mit einem in Wasser quellbaren Polymer gefüllt, wodurch im, vom vorangehenden Schleifen; feuchten Kreisringspalt die abrasiven Stoffe an Ort und Stelle fixiert werden.

Vorteilhaft liegt die Dimension, z. B. die Dicke, des Schärfmittels im Bereich von. 1 mm bis 10 mm, weiter vorteilhaft im Bereich von 2 mm bis 6 mm, was für den Kreisringspalt für Betonbohrkronen üblich ist.

Die Erfindung wird bezüglich zweier vorteilhafter Ausführungsbeispiele näher erläutert, wobei die Zeichnungen zeigen:
- Fig. 1: Die Situation beim Nachschärfen in z. T. aufgeschnittenen Perspektivdarstellung;
- Fig. 2: das Schärfmittel in einer ersten Ausführungsform; und
- Fig. 3: das Schärfmittel in einer zweiten Ausführungsform.

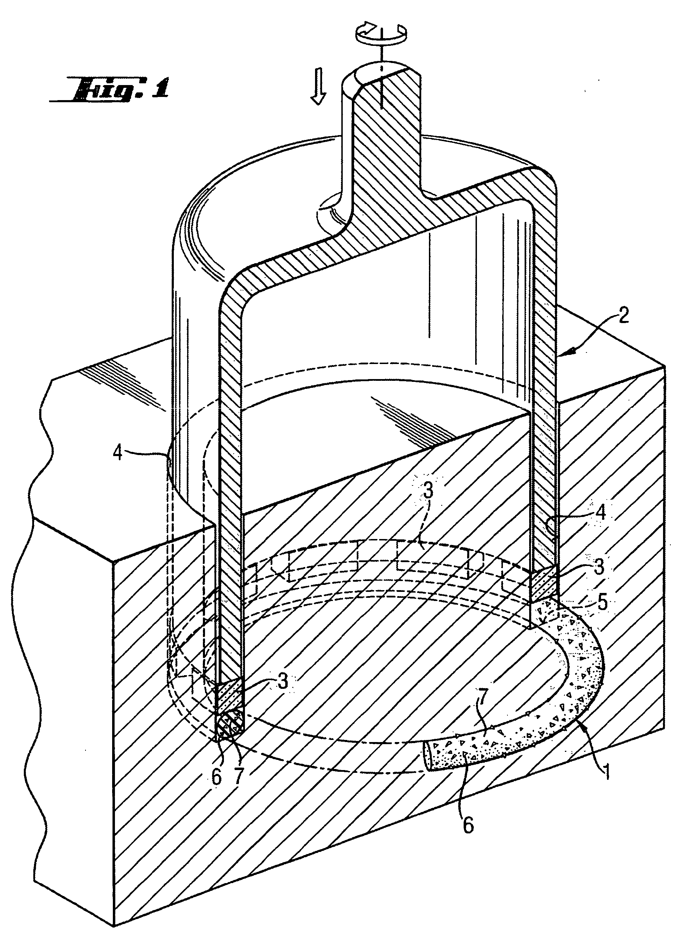

Nach Fig. 1 passt ein strangförmig ausgebildetes Schärfmittel 1 umfänglich in ein, zuvor durch die Bohrkrone 2 mit hartstoffbesetzten Schleifsegmenten 3 selbst erzeugtes, Sackloch 4 mit einem Kreisringspalt von ca. 5 mm Weite. Das gegen den Grund 5 des Sackloches 4 gedrückte, ca. 4 mm dicke Schärfmittel 1 ist dort reibkraftschlüssig fixiert und schärft die relativ zum Grund 5 bewegten Schleifsegmente 3 der Bohrkrone 2 abrasiv nach.

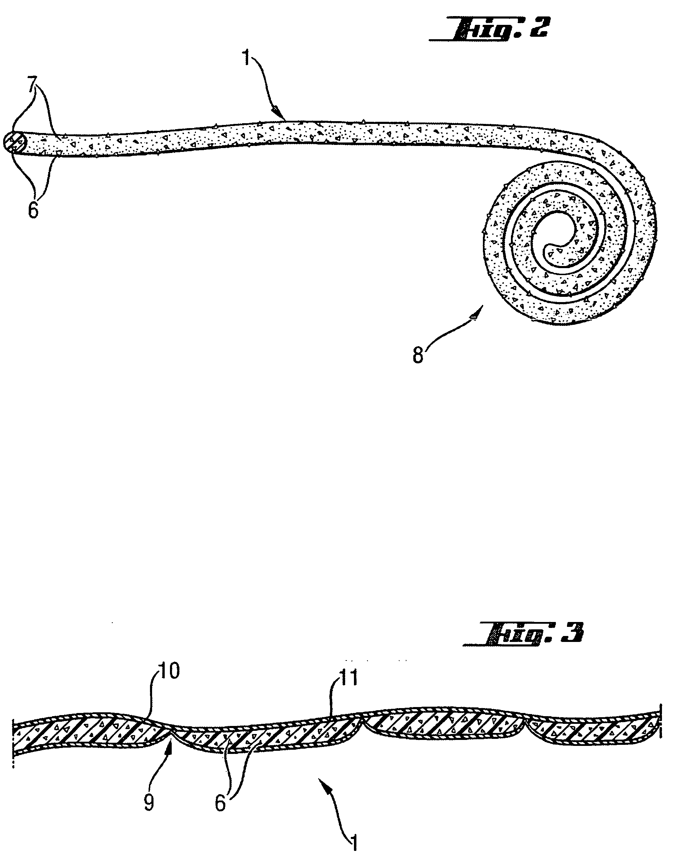

Nach Fig. 2 ist das mit abrasiven Stoffen 6 in einer weichen Matrix 7 aus Kunststoff gefüllte Schärfmittel 1 strangförmig ausgebildet und von einer quasi endlosen Vorratsrolle 8 ablängbar ausgeführt.

Nach Fig. 3 ist das, an längs seiner strangförmigen Länge verteilten, mehrere Sollbruchstellen 9 ablängbare, Schärfmittel 1 aus einem wasserunlöslichen Schlauch 10 ausgebildet, der mit losen abrasiven Stoffen 6 sowie mit einem in Wasser quellbaren Polymer 11 gefüllt ist.

## Patentansprüche

1. Schärfmittel für eine Bohrkrone (2) mit hartstoffbesetzten Schleifsegmenten (3), welches mit abrasiven Stoffen (6) gefüllt ist,
**dadurch gekennzeichnet, dass** es strangförmig derart ausgebildet ist, dass es umfänglich in einen durch die Bohrkrone erzeugten Kreisringspalt einlegbar und durch diese gegen den Grund des Spaltes drückbar ist, um dort reibkraftschlüssig fixiert die Schleifsegmente der Bohrkrone nachzuschärfen.

2. Schärfmittel nach Anspruch 1, **dadurch gekennzeichnet, dass** es von einer Vorratsrolle (8) ablängbar ausgeführt ist.

3. Schärfmittel nach Anspruch 1 oder 2, **dadurch gekennzeichnet, dass** es längs seiner strangförmigen Länge mehrere Sollbruchstellen (9) ausbildet.

4. Schärfmittel nach einem der vorherigen Ansprüche, **dadurch gekennzeichnet, dass** es aus einer mit abrasiven Stoffen (6) gefüllten Matrix (7) ausgebildet ist, optional aus einer weichen Kunststoffmatrix.

5. Schärfmittel nach Anspruch 1 bis 3, **dadurch gekennzeichnet, dass** es aus einem, weiter vorteilhaft wasserunlöslichen, Schlauch (10) ausgebildet ist, der mit losen abrasiven Stoffen (6) gefüllt ist.

6. Schärfmittel nach Anspruch 5, **dadurch gekennzeichnet, dass** der Schlauch (10) mit einem in Wasser quellbaren Polymer (11) gefüllt ist.

7. Schärfmittel nach einem der vorherigen Ansprüche, **dadurch gekennzeichnet, dass** die Dimension im Bereich von 1 mm bis 10 mm, optional im Bereich von 2 mm bis 6 mm liegt.

8. Verwendung eines Schärfmittels (1) nach einem der vorherigen Ansprüche zum Nachschärfen der Schleifsegmente (3) einer Bohrkrone (2).

9. Schärfverfahren für eine Bohrkrone (2) mit hartstoffbesetzten Schleifsegmenten (3), welche in einem letzten Schritt gegen ein Schleifmittel abrasiv reibend nachgeschärft wird, **dadurch gekennzeichnet, dass** vorgelagert in einem ersten Schritt durch die Bohrkrone (2) ein Sackloch (4) erzeugt wird, in einem zweiten Schritt ein strangförmig ausgebildetes Schärfmittel (1) umfänglich eingelegt wird und in einem dritten Schritt das Schärfmittel (1) durch die Schleifsegmente (3) der Bohrkrone (2) gegen den Grund (5) des Sackloches (4) gedrückt wird.

10. Schärfverfahren nach Anspruch 9, **dadurch gekennzeichnet, dass** im letzten Schritt eine bezüglich der zweckentsprechenden Nutzung der Bohrkrone (2) geringe Drehzahl und/oder geringere Kühlwasserzufuhr benutzt wird.

## Claims

1. Sharpening means for a core drill (2) with hard-material covered grinding segments (3) which is filled with abrasive materials (6), **characterised in that** it is designed in the form of strips in such a manner that it can be inserted peripherally into a circular gap produced by the core drill and pushed by it against the base of the gap so as to frictionally resharpen the grinding segments of the core drill.

2. Sharpening means according to Claim 1, **characterised in that** it is designed for lengths to be taken off a storage roll (8).

3. Sharpening tool according to Claim 1 or 2, **characterised in that** it forms along its stripshaped length a plurality of nominal breaking points (9).

4. Sharpening tool according to one of the above claims, **characterised in that** it is made of a matrix (7) which is filled with abrasive materials (6), optionally of a soft plastic matrix.

5. Sharpening tool according to Claim 1 to 3, **characterised in that** it is composed of a hose (10) which is advantageously water-resistant and filled with loose abrasive materials (6).

6. Sharpening tool according to Claim 5, **characterised in that** the hose (10) is filled with a polymer (11) which swells in water.

7. Sharpening tool according to one of the above claims, **characterised in that** the dimension lies in a range between 1 mm and 10 mm, optionally in a range between 2 mm and 6 mm.

8. Use of a sharpening means (1) according to one of the above claims for final sharpening of the grinding segments (3) of a core drill (2).

9. Sharpening process of a core drill (2) with hard-material covered grinding segments (3) which is in a last step sharpened with abrasive friction against a grinding material, **characterised in that** upstream in a first step a pocketbore (4) is produced by the core drill (2), in a second step a stripshaped sharpening means is peripherally inserted, and in a third step the sharpening means (1) is pressed by the grinding segments (3) of the drown drill (2) against the base (5) of the pockethole (4).

10. Sharpening process according to Claim 9, **characterised in that** in the last step a lower revolution relative to purposeful use of the core drill (2) and/or lower cooling water delivery is used.

## Revendications

1. Moyen d'affûtage pour un foret tubulaire (2) à segments de meulage garnis de substance dure (3), ledit moyen d'affûtage étant rempli de substances abrasives (6), **caractérisé en ce qu'**il est conformé en cordon, de façon à pouvoir être logé en périphérie dans un interstice annulaire réalisé par le foret tubulaire et à pouvoir être poussé par ce dernier contre le fond de l'interstice afin de réaffûter les segments de meulage du foret tubulaire en étant immobilisé par friction.

2. Moyen d'affûtage selon la revendication 1, **caractérisé en ce qu'**il est conçu pour pouvoir être débité à partir d'un rouleau de réserve (8).

3. Moyen d'affûtage selon la revendication 1 ou 2, **caractérisé en ce qu'**il comporte plusieurs emplacements de rupture imposée (9) le long de sa longueur en forme de cordon.

4. Moyen d'affûtage selon une des revendications précédentes, **caractérisé en ce qu'**il est constitué d'une matrice (7) remplie de substances abrasives (6), optionnellement d'une matrice en matière synthétique tendre.

5. Moyen d'affûtage selon la revendication 1 ou 3, **caractérisé en ce qu'**il est constitué d'un boyau (10), de manière également avantageuse insoluble dans l'eau, lequel est rempli de substances abrasives en vrac (6).

6. Moyen d'affûtage selon la revendication 5, **caractérisé en ce que** le boyau (10) est rempli d'un polymère gonflable dans l'eau (11).

7. Moyen d'affûtage selon une des revendications précédentes, **caractérisé en ce que** sa dimension se situe dans la plage de 1 mm à 10 mm, optionnellement dans la plage de 2 mm à 6 mm.

8. Utilisation d'un moyen d'affûtage (1) selon une des revendications précédentes pour réaffûter les segments de meulage (3) d'un foret tubulaire (2).

9. Procédé d'affûtage pour un foret tubulaire (2) à segments abrasifs garnis de substance dure (3), ledit foret étant, dans une dernière étape, réaffûté par frottement abrasif contre un moyen de meulage, **caractérisé en ce qu'**au préalable, dans une première étape un trou borgne (4) est réalisé par le foret tubulaire (2), dans une deuxième étape un moyen d'affûtage conformé en cordon (1) y est inséré en périphérie et, dans une troisième étape, le moyen d'affûtage (1) est poussé par les segments de meulage (3) du foret tubulaire (2) contre le fond (5) du trou borgne (4).

10. Procédé d'affûtage selon la revendication 9, **caractérisé en ce que**, dans la dernière étape, la vitesse de rotation du foret tubulaire (2) et/ou l'apport en eau de refroidissement sont réduits en fonction de l'usage auquel le foret tubulaire est destiné.
